# EUROPÄISCHE PATENTSCHRIFT

(11) **EP 1 008 376 B1**
(45) Veröffentlichungstag und Bekanntmachung des Hinweises auf die Patenterteilung: **21.02.2007**
(21) Anmeldenummer: 99121801.7
(22) Anmeldetag: 02.11.1999
(51) Int. Cl.: B01D 53/12, B01D 53/02, B01J 20/20, C01B 13/02, C01B 31/04

(54) **Material zur Reduzierung oder Beseitigung von unerwünschten Beimengungen in Gasen, Verfahren zu dessen Herstellung und Anwendung**
Material for reducing or removing of unwanted impurities from a gas, process for the production and use thereof
Matériau pour réduire ou éliminer des impuretés indésirables d'un gaz, procédé de fabrication et d'utilisation

(30) Priorität: 11.12.1998 DE 19857190
(43) Veröffentlichungstag der Anmeldung: 14.06.2000
(73) Patentinhaber: Leibniz-Institut für Festkörper- und Werkstoffforschung Dresden e.V., 01069 Dresden (DE)
(72) Erfinder: Hermann, Helmut, 01187 Dresden (DE); Seifert, Gotthart, 01809 Meusegast (DE); Gruner, Wolfgang, 01279 Dresden (DE); Mattern, Norbert, 01744 Malter (DE); Schubert, Thomas, 01827 Graupa (DE)
(74) Vertreter: Rauschenbach, Dieter

(56) Entgegenhaltungen:
- DE-A- 2 400 492
- DE-A- 4 338 928
- GB-A- 953 592
- PATENT ABSTRACTS OF JAPAN vol. 014, no. 492 (C-0773), 26. Oktober 1990 (1990-10-26) & JP 02 203944 A (HITACHI POWDERED METALS CO LTD), 13. August 1990 (1990-08-13)
- PATENT ABSTRACTS OF JAPAN vol. 199, no. 811, 30. September 1998 (1998-09-30) & JP 10 165765 A (CHICHIBU ONODA CEMENT CORP), 23. Juni 1998 (1998-06-23)
- PATENT ABSTRACTS OF JAPAN vol. 199, no. 602, 29. Februar 1996 (1996-02-29) & JP 07 284624 A (NIPPON STEEL CORP), 31. Oktober 1995 (1995-10-31)

## Beschreibung

Die Erfindung betrifft ein Material zur Reduzierung oder Beseitigung von unerwünschten gasförmigen Beimengungen in Gasen. Eingeschlossen in die Erfindung sind ein Verfahren zur Herstellung und ein Verfahren zur Anwendung des erfindungsgemäßen Materials.

Es sind zahlreiche Verfahren bekannt, die es gestatten, Verunreinigungen aus Gasen zu entfernen. Einen besonders hohen Aufwand erfordert dabei die Herstellung von Reinstgasen für die Halbleiterindustrie. Bedingung ist dort, dass die Summe der Verunreinigungen in einem Gas in der Regel höchstens 0,1 Vppm betragen darf. Im Falle der Verwendung von N₂ gilt die Bedingung, dass der O₂-Gehalt unter 0,5 Vppm liegt.

Es ist bekannt die zu reinigenden Gasgemische mit festen Absorptionskatalysatoren oder mit flüssigen Absorptionsmitteln zu behandeln, welche die Verunreinigungen aufnehmen.

Bekannt sind auch Edelmetallkatalysatoren, bei denen die Verunreinigungen durch Reaktionen mit anderen Stoffen in Verbindungen umgewandelt werden, die sich anschließend leicht aus dem zu reinigenden Gas beseitigen lassen.

Zur Beseitigung von Stickstoff, Sauerstoff, Wasserstoff und Kohlenwasserstoffen aus Edelgasen ist es bekannt, die unreinen Edelgase bei 900°C über Kupferoxid, bei 600°C über Calcium-Chips und bei 300 bis 400°C nochmals über Kupferoxid zu leiten (GB 503 533). Dieses bekannte Verfahren ist jedoch energetisch und apparativ sehr aufwendig. Außerdem lassen sich mit diesem Verfahren auch keine hohen Reinheitsforderungen erfüllen.

Bekannt ist auch ein Verfahren mit dem es möglich ist, Inertgase von Verunreinigungen im Bereich von einigen Vppm zu befreien. Hierbei wird das zu reinigende das Gas durch zwei Bettungen geschickt. Die erste Bettung besteht aus einem Gemisch von Chrom und Platin und die zweite aus einem Gemisch aus Kupfer, Nickel und Kobalt, mit Spuren von Silber, Chrom und Mangan. Beide Gemische sind auf einem Aluminiumoxidträger fixiert. Nachteilig ist, dass die eingesetzten Materialien durch Erhitzen auf etwa 200°C und Spülen mit einem Spülgas regeneriert werden müssen, wobei dem Spülgas auch noch Wasserstoff zugeführt werden muß, um die auf den Gemischen gebildeten Oxide zu reduzieren.

Zur Entfernung von Sauerstoff aus Gasgemischen ist der Einsatz von Metallen und Metalloxiden bekannt, welche den aus einem Gasgemisch zu beseitigenden Sauerstoff chemisch binden. So ist beispielsweise die Anwendung von fein verteiltem Kupfer und von Kupferoxid (DE 11 06 293, DE 15 44 007, DE 21 02 039) bekannt. Bekannt ist auch die Anwendung von Nickel (DD 224 229) und Nickeloxid (DE 12 17 348) sowie von Manganoxid (DE 16 67 129). Derartige Reinigungsmaterialien müssen aber vor ihrer Anwendung zunächst im Wasserstoffstrom bei hohen Temperaturen aktiviert werden. Bei direkter Anwendung von Metallen wie Titan (DE 25 53 554), Chrom (DE 16 57 129) oder Metallegierungen (DE 39 26 015) werden hohe Temperaturen von bis zu 1000°C zur effektiven Reinigung benötigt. Bei allen genannten Verfahren ist eine Absenkung der Verunreingungen unter 1 Vppm nicht möglich, so dass die Reinheitsanforderungen an Reinstgase für viele Anwendungsgebiete nicht erfüllt werden.

Auch der Einsatz von Aktivkohle (DE 38 25 725) oder von Molsiebkoksen (DE 34 33 058), DD 133 195) führt nicht zu höheren Reinigungsgraden.

Bezüglich der Verwendung von Aktivkohle ist es bekannt, diese unter Schutzgas zu Zerkleinern und dabei mit einem Energieeintrag zu versehen (GB 953 592 A). Bei der Zerkleinerung können störende Gase, wie Wasserstoff, entfernt werden. Es ist auch bekannt, Aktivkohle in Flüssigkeitseinbettung zur Gasreinigung einzusetzen (JP 10 165765 A). Aktivkohle ist jedoch nicht nennenswert chemisch reaktiv, sondern wirkt im Wesentlichen durch die große spezifische Oberfläche. Außerdem verfügt Aktivkohle nicht über eine einstellbare Reaktivität bezüglich unterschiedlicher Gasbeimengungen.

Um Sauerstoff und andere gasförmige Verunreinigungen aus Edel- und Inertgasen zu beseitigen ist auch die Anwendung von Molsieben bekannt (DE 36 32 995; DE 24 00 492). Molsiebe beseitigen aber in der Regel nur solche Verunreinigungen, die dem jeweiligen Porenvolumen entsprechen. Mehrfachverunreinigungen können deshalb nur unter Verwendung verschiedener Molsiebe oder anderer Sorbenten beseitigt werden, deren Herstellung aufwendig und teuer ist und die eine komplizierte Reinigungstechnologie erforderlich machen. Die Aufnahmekapazität solcher metallischer oder oxidischer Materialien ist außerdem nicht sehr hoch, so dass in kurzen Zeiträumen eine Regeneration erforderlich ist. Ein grundlegender Nachteil von Molsieben besteht außerdem darin, dass es nur mit großem Aufwand möglich ist, Spurenverunreinigungen unter 1 Vppm zu beseitigen.

Der Erfindung liegt die Aufgabe zugrunde, ein Material zur Reduzierung oder Beseitigung von unerwünschten Beimengungen in Gasen zu finden, das eine einstellbare Reaktivität bezüglich unterschiedlicher Gasbeimengungen besitzt, einen Reinigungsfaktor unter 0,1 Vppm ermöglicht und kostengünstig ist.

Diese Aufgabe ist mit einem Material gelöst, das aus einem Kohlenstoffpulver mit einer durch einen Energieeintrag erhöhte Energie besteht und das erfindungsgemäß ein Ultrafeinstpulver ist, dessen Teilchen eine Größe im Bereich von 1 nm bis 10 nm, einen wasserstofffreien atomaren Aufbau und eine durch einen Energieeintrag erhöhte innere Energie besitzen, wobei der wasserstofffreie atomare Aufbau der Teilchen im Bereich von s = 1 Å⁻¹ bis s = 6 Å⁻¹ des Beugungsdiagrammes durch jeweils ein Beugungsmaximum in den Teilbereichen von 1,5 Å⁻¹ bis 2,5 Å⁻¹, von 2,5 Å⁻¹ bis 4, 5 Å⁻¹ und von 4, 5 Å⁻¹ bis 6 Å⁻¹ charakterisiert ist.

Erfindungsgemäß wird zur Herstellung des Materials graphitisch gebundener Kohlenstoff in einem Feinstmahlprozess in einer Argon-Atmosphäre bis auf eine Teilchengröße im Bereich von 1 nm bis 10 nm aufgemahlen und dabei mit einem Energieeintrag versehen.

Vorteilhafterweise wird der Feinstmahlprozess in einer Kugelmühle durchgeführt.

Zur Anwendung des Materials wird gemäß der Erfindung das Ultrafeinstpulver als Reaktionsmedium in einem Wirbelschichtreaktor eingesetzt wird, durch den ein von unerwünschten Beimengungen zu reinigendes Gas geführt wird.

Zur Anwendung des Materials kann erfindungsgemäß auch das Ultrafeinstpulver mittels Sprühelektroden, die an einem elektrischem Spannungspotential liegen, in einen zu reinigenden Gasstrom eingebracht und nachfolgend mittels Niederschlagselektroden, die an einem gegenpoligen elektrischem Spannungspotential liegen, wieder abgeschieden werden.

Das erfindungsgemäße Material zeichnet sich gegenüber dem Stand der Technik dadurch aus, dass es eine einstellbare Reaktivität bezüglich unterschiedlicher Gasbeimengungen besitzt, einen Reinigungsfaktor unter 0,1 Vppm ermöglicht und kostengünstig ist.

Nachstehend ist die Erfindung anhand von Ausführungsbeispielen näher erläutert. In der zugehörigen Zeichnung zeigen in schematischer Darstellung:
- Fig. 1:: einen Wirbelschichtreaktor zur Gasreinigung,
- Fig. 2:: eine elektrostatische Vorrichtung zur Gasreinigung.

### Beispiel 1

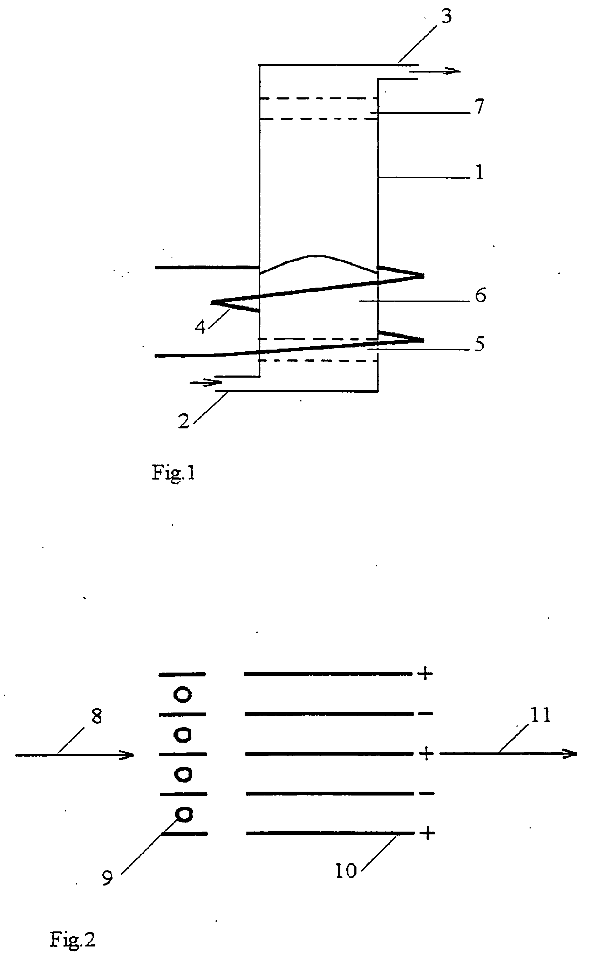

Ein zu reinigendes inertes Rohgas, beispielsweise N₂, Ar oder He, mit unerwünschten Beimengungen in Form von 5 Vppm O₂, 5 Vppm H₂O und 0,5 Vppm Kohlenwasserstoffe wird zum Entfernen dieser Beimengungen durch den in Fig. 1 dargestellten Wirbelschichtreaktor 1 geleitet. Der Wirbelschichtreaktor 1 weist einen Gaseintritt 2 und einen Gasaustritt 3 auf und ist mit einer Heizeinrichtung 4 ausgestattet.

Das zu reinigende Gas durchströmt im Wirbelschichtreaktor 1 zunächst eine Filtermembran 5 und danach eine Wirbelbettzone, in der sich eine Schüttung eines aus Kohlenstoff bestehenden Ultrafeinstpulvers 6 befindet. Dieses Ultrafeinstpulver besitzt eine mittlere Korngröße von 4 nm und wurde aus einem Graphit-Ausgangspulver mittels eines Feinstmahlprozesses in einer Kugelmühle unter Verwendung von WC-Mahlkugeln mit einer Mahldauer von 5 h hergestellt. Das Ultrafeinstpulver besitzt einen wasserstofffreien atomaren Aufbau und eine durch einen Energieeintrag erhöhte innere Energie, wobei der wasserstofffreie atomare Aufbau der Teilchen im Bereich von s = 1 Å⁻¹ bis s = 6 Å⁻¹ des Beugungsdiagrammes durch jeweils ein Beugungsmaximum in den Teilbereichen von 1,5 Å⁻¹ bis 2,5 Å⁻¹, von 2,5 Å⁻¹ bis 4,5 Å⁻¹ und von 4,5 Å⁻¹ bis 6 Å⁻¹ charakterisiert ist.

Dieses Ultrafeinstpulver reagiert mit den im Rohgas enthaltenen unerwünschte Beimengungen und bindet diese damit. Das so beladene Ultrafeinstpulver wird mittels eines im Wirbelbettreaktor angeordneten Feinstfilters 7 am Austritt gehindert. Das aus dem Wirbelbettreaktor austretende Gas hat noch einen O₂-Gehalt von 0,1 Vppm. Die weiteren Beimengungen sind 0,5 Vppm H₂O und 0,2 Vppm Kohlenwasserstoffe.Das entstandene CO₂ wird mit einem in der Zeichnung nicht dargestellten nachgeschalteten bekannten CO₂-Adsorber entfernt.

### Beispiel 2

Ein zu reinigendes inertes Rohgas, beispielsweise N₂, Ar oder He, mit unerwünschten Beimengungen in Form von 5 Vol.-% O₂ sowie 1 Vol.-% H₂O und Kohlenwasserstoffen wird ein aus Kohlenstoff bestehendes Ultrafeinstpulver durch Verwirbeln zugesetzt, das eine mittlere Korngröße von 5 nm besitzt. Dieses Ultrafeinstpulver wurde hergestellt, indem ein Graphit-Ausgangspulver in einer Kugelmühle unter Verwendung von Edelstahl - Mahlkugeln mit einer Dauer von 25 h einem Feinstmahlproess unterworfen wurde. Das Ultrafeinstpulver besitzt einen wasserstofffreien atomaren Aufbau und eine durch einen Energieeintrag erhöhte innere Energie, wobei der wasserstofffreie atomare Aufbau der Teilchen im Bereich von s = a Å⁻¹ bis s = b Å⁻¹ des Beugungsdiagrammes durch jeweils ein Beugungsmaximum in den Teilbereichen von c Å⁻¹ bis d Å⁻¹, von e Å⁻¹ bis f Å⁻¹ und von g Å⁻¹ bis h Å⁻¹ charakterisiert ist.

Das auf diese Weise mit dem Ultrafeinstpulver versetzte Rohgas 8 reagiert mit den im Rohgas enthaltenen unerwünschte Beimengungen und wird der in Fig. 2 dargestellten elektrostatischen Vorrichtung zugeführt. Dort werden die Ultrafeinstpulverteilchen an Sprühelektroden 9 elektrostatisch aufgeladen und an nachfolgenden Niederschlagselektroden 10 abgeschieden.

Das aus der elektrostatische Vorrichtung austretende Gas 11 besitzt einen O₂-Gehalt von lediglich noch 100 Vppm. Die Summe der weiteren Beimengungen H₂O und Kohlenwasserstoffe ist < 500 Vppm. Das entstandene CO₂ wird mit einem in der Zeichnung nicht dargestellten nachgeschalteten bekannten CO₂-Adsorber entfernt.

## Patentansprüche

1. Material zur Reduzierung oder Beseitigung von unerwünschten gasförmigen Beimengungen in Gasen, bestehend aus einem Kohlenstoffpulver, das eine durch einen Energieeintrag erhöhte innere Energie besitzt, **dadurch gekennzeichnet, dass** das Kohlenstoffpulver ein Ultrafeinstpulver ist, dessen Teilchen eine Größe im Bereich von 1 nm bis 10 nm und einen wasserstofffreien atomaren Aufbau aufweisen, wobei der wasserstofffreie atomare Aufbau der Teilchen im Bereich von s = 1 Å⁻¹ bis s = 6 Å⁻¹ des Beugungsdiagrammes durch jeweils ein Beugungsmaximum in den Teilbereichen von 1,5 Å⁻¹ bis 2,5 Å⁻¹, von 2,5 Å⁻¹ bis 4,5 Å⁻¹ und von 4,5 Å⁻¹ bis 6 Å⁻¹ charakterisiert ist.

2. Verfahren zur Herstellung des Materials gemäß Anspruch 1, **dadurch gekennzeichnet, dass** graphitisch gebundener Kohlenstoff in einem Feinstmahlprozess in einer Argon-Atmosphäre bis auf eine Teilchengröße im Bereich von 1 nm bis 10 nm aufgemahlen und dabei mit einem Energieeintrag versehen wird.

3. Verfahren nach Anspruch 2, **dadurch gekennzeichnet, dass** der Feinstmahlprozess in einer Kugelmühle durchgeführt wird.

4. Verfahren zur Anwendung des Materials gemäß Anspruch 1, **dadurch gekennzeichnet, dass** das Ultrafeinstpulver als Reaktionsmedium in einem Wirbelschichtreaktor eingesetzt wird, durch den ein von unerwünschten Beimengungen zu reinigendes Gas geführt wird.

5. Verfahren zur Anwendung des Materials gemäß Anspruch 1, **dadurch gekennzeichnet, dass** das Ultrafeinstpulver mittels Sprühelektroden, die an einem elektrischem Spannungspotential liegen, in einen zu reinigenden Gasstrom eingebracht und nachfolgend mittels Niederschlagselektroden, die an einem gegenpoligen elektrischem Spannungspotential liegen, wieder abgeschieden wird.

## Claims

1. Material for reducing or eliminating undesired gaseous minor constituents in gases, consisting of a carbon powder which has an increased internal energy owing to energy input, **characterized in that** the carbon powder is an ultrafine powder whose particles have a size in the range of from 1 nm to 10 nm and a hydrogen-free atomic structure, the hydrogen-free atomic structure of the particles being **characterized in** the range of from s = 1 Å⁻¹ to s = 6 Å⁻¹ of the diffraction diagram by a diffraction maximum respectively in the subranges from 1.5 Å⁻¹ to 2.5 Å⁻¹, from 2.5 Å⁻¹ to 4.5 Å⁻¹ and from 4.5 Å⁻¹ to 6 Å⁻¹.

2. Method for preparing the material according to Claim 1, **characterized in that** graphitically bound carbon is ground by a very fine grinding process in an argon atmosphere down to a particle size in the range of from 1 nm to 10 nm while being provided with an energy input.

3. Method according to Claim 2, **characterized in that** the very fine grinding process is carried out in a ball mill.

4. Method of using the material according to Claim 1, **characterized in that** the ultrafine powder is used as a reaction medium in a fluidized bed reactor, through which a gas to be rid of undesired minor constituents is passed.

5. Method of using the material according to Claim 1, **characterized in that** the ultrafine powder is introduced by means of spray electrodes, which are at an electrical voltage potential, into a gas stream to be purified and is subsequently redeposited by means of precipitation electrodes, which are at an oppositely poled electrical voltage potential.

## Revendications

1. Matériau destiné à réduire ou éliminer des impuretés gazeuses indésirables dans des gaz, constitué d'une poudre de carbone dont l'énergie interne est augmentée par injection d'énergie, **caractérisé en ce que** la poudre de carbone est une poudre ultrafine dont les particules ont une taille comprise dans la plage de 1 nm à 10 nm et une structure moléculaire exempte d'hydrogène, la structure moléculaire exempte d'hydrogène des particules dans la plage de s = 1 Å⁻¹ à s = 6 Å⁻¹ du diagramme de diffraction est **caractérisée par** un maximum de diffraction dans les plages partielles de 1,5 Å⁻¹ à 2,5 Å⁻¹, de 2,5 Å⁻¹ à 4,5 Å⁻¹, et de 4,5 Å⁻¹ à 6 Å⁻¹.

2. Procédé de fabrication du matériau selon la revendication 1, **caractérisé en ce que** l'on broie du carbone graphitique par une opération de broyage ultrafin sous atmosphère d'argon jusqu'à obtenir des particules d'une taille comprise dans une plage de 1 nm à 10 nm et pour ainsi leur injecter de l'énergie.

3. Procédé selon la revendication 2, **caractérisé en ce que** l'opération de broyage ultrafin est réalisée dans un broyeur à billes.

4. Procédé d'utilisation du matériau selon la revendication 1, **caractérisé en ce que** la poudre ultrafine est utilisée comme milieu réactif dans un réacteur à lit fluidisé dans lequel on fait passer un gaz qui doit être épuré d'impuretés indésirables.

5. Procédé d'utilisation du matériau selon la revendication 1, **caractérisé en ce que** la poudre ultrafine est amenée dans l'écoulement de gaz à épurer au moyen d'électrodes de pulvérisation qui sont placées à un potentiel électrique, et est ensuite déposée au moyen d'électrodes de dépôt qui sont placées à un potentiel électrique opposé.
